# EUROPEAN PATENT SPECIFICATION

(11) **EP 2 909 272 B1**
(45) Date of publication and mention of the grant of the patent: **02.11.2016**
(21) Application number: 13750481.7
(22) Date of filing: 12.08.2013
(51) Int. Cl.: C08L 83/12, C08L 63/00, C04B 26/14, C04B 26/32

(54) **COMPOSITION OF SILANE-MODIFIED POLYMER, EPOXY RESIN AND CURE CATALYST, AND POLYMER CONCRETE COMPRISING THE COMPOSITION**
ZUSAMMENSETZUNG AUS EINEM SILANMODIFIZIERTEN POLYMER, EPOXIDHARZ UND HÄRTUNGSKATALYSATOR SOWIE POLYMERBETON MIT DER ZUSAMMENSETZUNG
COMPOSITION DE POLYMÈRE MODIFIÉ PAR UN SILANE, DE RÉSINE ÉPOXY ET DE CATALYSEUR DE DURCISSEMENT ET BÉTON DE POLYMÈRE COMPRENANT LA COMPOSITION

(30) Priority: 19.10.2012 US 201261716085 P
(43) Date of publication of application: 26.08.2015
(73) Proprietor: Dow Global Technologies LLC, Midland, MI 48674 (US)
(72) Inventor: VYAKARANAM, Kamesh, Midland, Michigan 48674 (US); LATHAM, Dwight, Clute, TX 77531 (US); CHANG, Kwanho, Midland, Michigan 48674 (US)
(74) Representative: Beck Greener
(86) International application number: PCT/US2013/054545
(87) International publication number: WO 2014/062284

(56) References cited:
- EP-B1- 0 186 191
- US-B1- 6 737 482

## Description

### FIELD OF THE INVENTION

This invention relates to silane-modified polymer (SMP) compositions. In one aspect the invention relates to a polymer concrete comprising a composition comprising a SMP, an epoxy resin and a cure catalyst. In another aspect, the invention relates to a process of repairing concrete using the polymer concrete.

### BACKGROUND OF THE INVENTION

Silane-modified polymers (SMP), also known as silylated polymers, are versatile, high value industrial resins widely accepted for applications of adhesives and sealants They are recognized as an isocyanate-free alternative to polyurethane elastomers. The hydro-condensation cure reaction endows SMP with a great deal of flexible features in processing including ambient cure, tunable cure speed, low viscosity and low exotherm. Relatively low profiles in tensile and mechanical properties are significantly improved by incorporating an epoxy resin and a hardener at a proper ratio. The cured epoxy-SMP hybrid material shows a phase separated morphology.

Concrete in ubiquitous is modem society. It has been in use since at least Roman times. While concrete, when properly prepared and installed, can have a useful life of many years, eventually it will crack and erode and this deterioration will require repair. Mortar is a common material for the repair of concrete, but its usefulness can be limited by many factors, including the condition of the concrete and the conditions under which it is applied and allowed to cure. Applying mortar to wet concrete and/or curing mortar under wet conditions can be particularly difficult.

### SUMMARY OF THE INVENTION

In one embodiment the invention is a polymer concrete comprising a SMP composition (Composition 1) comprising: (A) a SMP, (B) an epoxy resin, and (C) a cure catalyst. In one embodiment the epoxy resin of Composition 1 comprises an epoxy monomer and/or an epoxy-terminated prepolymer. In one embodiment the epoxy-terminated prepolymer of Composition 1 is an epoxy end-capped polyetheramine.

In one embodiment the SMP of Composition 1 comprises at least one molecule of Structure I: 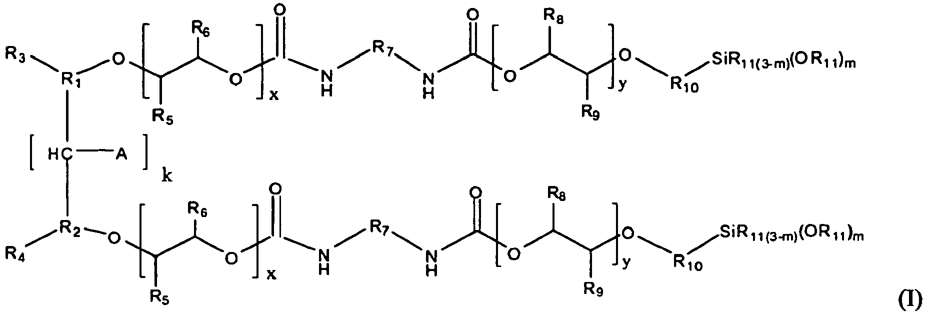 where A is either H or has the Structure (II): 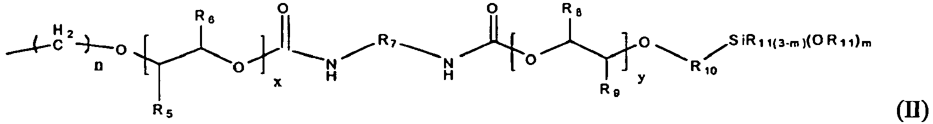 k is a number from 0 to 4; m and n are independently numbers from 0 to 3; x is a number from 5 to 150; y is a number from 4 to 20; R₁, R₂, R₁₀, and R₁₁ are independently straight chain or branched chain alkyl groups having from 1 to about 4 carbon atoms; each individual R₁₀ are the same or different and each individual R₁₁ are the same or different; R₃, R₄, R₅, R₆, R₈, and R₉ are independently selected from H and straight chain or branched chain alkyl groups having from 1 to about 4 carbon atoms; R₇ has from 2 to about 20 carbon atoms and is aliphatic, cycloaliphatic, bis-benzylic, or aromatic; and if k is 0, then n is 0 and R₁ and R₂ are coupled through a carbon-carbon bond.

In one embodiment the invention is a polymer concrete comprising a composition (Composition 2) comprising:
(A) A silylated polymer (SMP) comprising at least one molecule of Structure I: 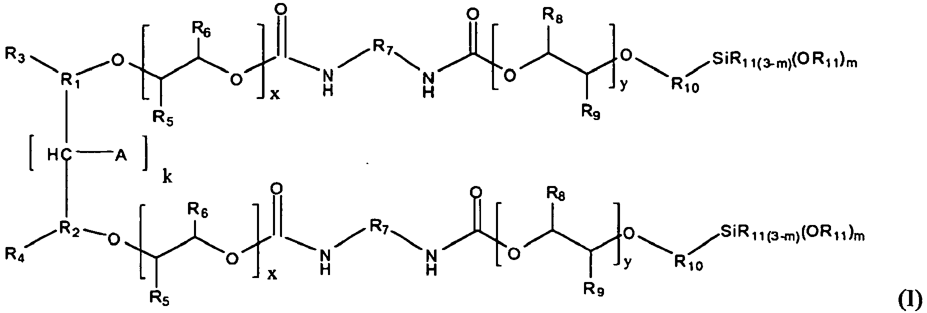 where A is either H or has the Structure (II): 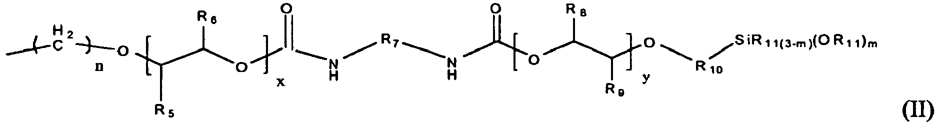 k is a number from 0 to 4; m and n are independently numbers from 0 to 3; x is a number from 5 to 150; y is a number from 4 to 20; R₁, R₂, R₁₀, and R₁₁ are independently straight chain or branched chain alkyl groups having from 1 to about 4 carbon atoms; each individual R₁₀ are the same or different and each individual R₁₁ are the same or different; R₃, R₄, R₅, R₆, R₈, and R₉ are independently selected from H and straight chain or branched chain alkyl groups having from 1 to about 4 carbon atoms; R₇ has from 2 to about 20 carbon atoms and is aliphatic, cycloaliphatic, bis-benzylic, or aromatic; and if k is 0, then n is 0 and R₁ and R₂ are coupled through a carbon-carbon bond;
(B) An epoxy resin, and
(C) A cure catalyst.
In one embodiment the epoxy resin of Composition 2 comprises an epoxy monomer and/or an epoxy-terminated prepolymer. In one embodiment the epoxy-terminated prepolymer of Composition 2 is an epoxy end-capped polyetheramine.

In one embodiment the invention is a method of repairing concrete, the method comprising the step of applying to the concrete a polymer concrete comprising Composition 1 and/or Composition 2.

### BRIEF DESCRIPTION OF THE DRAWINGS

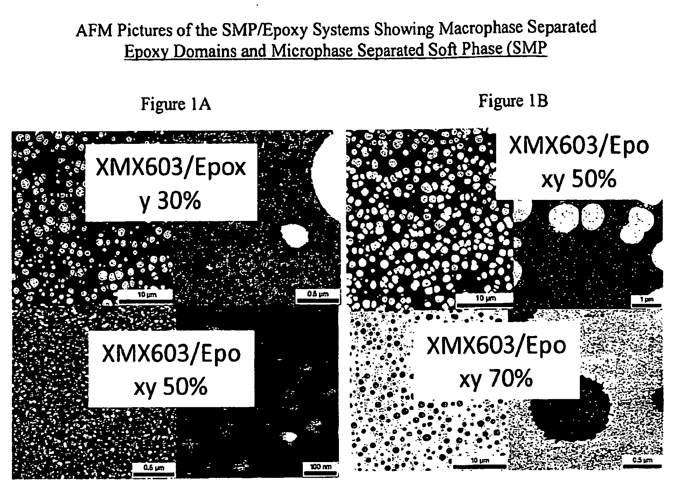

Figures 1A and 1B are atomic force microscopy pictures showing phase separation of SMP (dark area) and epoxy (bright area).

### DETAILED DESCRIPTION OF THE PREFERRED EMBODIMENT

### Definitions

Unless stated to the contrary, implicit from the context, or customary in the art, all parts and percentages are by weight. For purposes of United States patent practice, the contents of any referenced patent, patent application or publication are incorporated by reference in their entirety especially with respect to the disclosure of synthetic techniques, definitions (to the extent not inconsistent with any definitions specifically provided in this disclosure), and general knowledge in the art.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, viscosity, melt index, etc., is from 100 to 1,000, it is intended that all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the number of carbon atoms in the various R substituents of Structures I and II and the amounts of silylated polymer, monomer and/or polymer containing reactive epoxy functionality, and catalyst in Compositions 1 and 2 and the mortar.

"Composition", "formulation" and like terms means a mixture or blend of two or more components. In the context of an SMP mix or blend, it includes the SMP, epoxy-containing monomer, polymer and/or prepolymer, cure catalyst and any additives and/or fillers. In the context of mortar, it includes Compositions 1 and/or 2, sand and any additives and/or fillers.

"Polymer" and like terms mean a compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined below.

"Interpolymer" and like terms mean a polymer prepared by the polymerization of at least two different types of monomers. The generic term interpolymer thus includes copolymers (employed to refer to polymers prepared from two different types of monomers), and polymers prepared from more than two different types of monomers.

"Polymer concrete" and like terms mean a composition similar to that of mortar, i.e., a composition comprising sand, binder and water but unlike mortar in which the binder is typically lime or cement, the binder is a polymer. In the context of this invention, the binder of a polymer concrete is Composition 1 or Composition 2.

"Comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

### Silane-Modified Polymers (SMP)

In one embodiment of this invention and in the context of Composition 1, the composition and structure of the SMP can vary widely. The SMP that can be used in Composition 1 include those described in USP 6,737,482 (including those having an introduction rate of the reactive silicon group into the molecular chain terminus of the polyoxyalkylene polymer component of the SMP of less than 85% as analyzed by 1 H-NMR spectrometry), the silyl-terminated polymers (STP) of USSN 61/359,992, and the SMP comprising Structure I. Preferably, the SMP of Composition 1 is either the STP of USSN 61/359,992 or the SMP comprising Structure I.

The SMP used Composition 2 comprises at least one molecule having the following Structure (I): 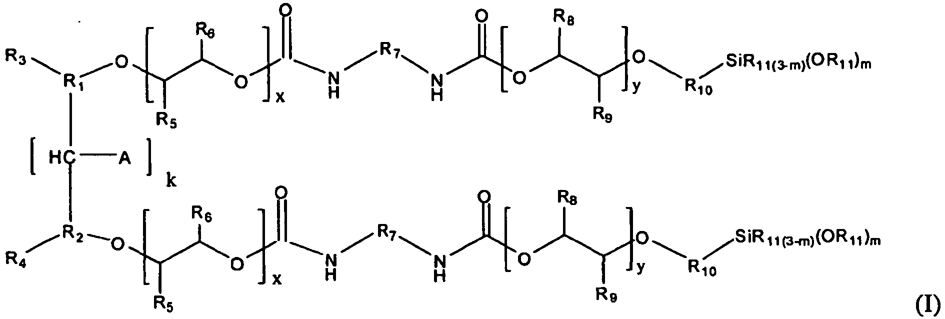 where A is either H or has the Structure (II): 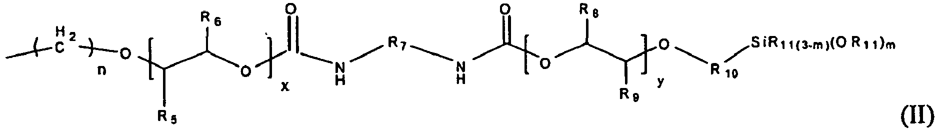 k is a number from 0 to 4; m and n are independently numbers from 0 to 3; x is a number from 5 to 150; y is a number from 4 to 20; R₁, R₂, R₁₀, and R₁₁ are independently straight chain or branched chain alkyl groups having from 1 to about 4 carbon atoms; each individual R₁₀ are the same or different and each individual R₁₁ are the same or different; R₃, R₄, R₅, R₆, R₈, and R₉ are independently selected from H and straight chain or branched chain alkyl groups having from 1 to about 4 carbon atoms; R₇ has from 2 to about 20 carbon atoms and is aliphatic, cycloaliphatic, bis-benzylic, or aromatic; and if k is 0, then n is 0 and R₁ and R₂ are coupled through a carbon-carbon bond.

In one embodiment of the invention, k is 1, n is 0 or 1, at least one R₅ and at least one R₉ are H, at least one R₆ and at least one R₈ are methyl groups, one of R₃ and R₄ is a methyl group and one of R₃ and R₄ is a H, x is a number between about 20 and about 50, and y is a number between about 10 and 18.

In one embodiment of the invention, k is 1, n is 0 or 1, at least one R₅ and at least one R₉ are H, at least one R₆ and at least one R₈ are methyl groups, one of R₃ and R₄ is a methyl group and one of R₃ and R₄ is a H, x is a number between about 20 and about 50, and y is a number between about 10 and 18.

The SMP used in either Composition 1 or 2, particularly low viscosity SMP, may be obtained by the hydrosilylation of a polymer having at least one unsaturated group and at least one alcoholic hydroxyl group in each molecule. The hydrosilylated polymers may then be capped by exposing the hydrosilylated polymer to at least one isocyanate to form a composition including isocyanate capped hydrosilylated polymers. The isocyanate capped hydrosilylated polymers may then be reacted with a polyol having a nominal functionality of at least 2 to form the SMP.

The polymer having at least one unsaturated group and at least one alcoholic hydroxyl group is not particularly restricted, and may include any polymer as long as they include at least one unsaturated group (such as a carbon-carbon double bond or carbon-carbon triple bond) and at least one alcoholic hydroxyl group.

The polymer having at least one unsaturated group and at least one alcoholic hydroxyl group in each molecule may have a number average molecular weight of between about 100 and about 5000, for example the number average molecular weight can be from a lower limit of 100, 200, 300, 400, 500, 600, 700, 800, 900, 1000, 1250, 1500, or 1750 to, independently, an upper limit of 1000, 1250, 1500, 1750, 2000, 2500, 3000, 3500, 4000, 4500, or 5000.

In one embodiment the polymer having at least one unsaturated group and at least one alcoholic hydroxyl group in each molecule may be a polyoxyalkylene polymer as described in copending U.S. Provisional Patent Application No. 61/348,996, filed May 27, 2010, and entitled "Methods for Producing Crosslinkable Silyl Group-Containing Polyoxyalkylene Polymers.

In one embodiment, the polymer having at least one unsaturated group and at least one alcoholic hydroxyl group in each molecule may be made by subjecting an epoxy compound to ring opening polymerization using an unsaturated group- and active hydrogen-containing compound as a polymerization initiator in presence of a catalyst. Catalysis for this polymerization can be either anionic or cationic, with catalysts such as KOH, CsOH, boron trifluoride, or a double cyanide complex (DMC) catalyst such as zinc hexacyanocobaltate or quaternary phosphazenium compound. The active hydrogen-containing compound that may be used as a polymerization initiator is not restricted but may be any of those compounds which are applicable in association with double metal cyanide complexes, such as, for example, compounds including an alcoholic hydroxyl, phenolic hydroxyl or carboxyl group.

The alcoholic hydroxyl-containing compound may include allyl alcohol, methallyl alcohol, trimethylolpropane monoallyl ether, trimethylolpropane diallyl ether, glycerol monoallyl ether, glycerol diallyl ether; ethylene oxide adducts or propylene oxide adducts thereof and like compounds containing at least one unsaturated group and at least one alcoholic hydroxyl group in each molecule; hydroxyl-terminated hydrocarbon compounds such as hydroxyl-terminated polybutadiene; and the like. Such active hydrogen-containing compounds serving as polymerization initiators may be used singly or a plurality thereof may be used in combination.

The mono-epoxide which may be used in the ring opening polymerization may include, among others, mono-epoxides having no unsaturated group such as ethylene oxide, propylene oxide, butene oxide, isobutene oxide, epichlorohydrin and styrene oxide; and unsaturated group-containing mono-epoxides such as allyl glycidyl ether, methallyl glycidyl ether, glycidyl acrylate, glycidyl methacrylate, butadiene monoxide and cyclopentadiene monoxide.. These may be used singly or a plurality thereof may be used in combination.

In one embodiment, the polymer having at least one unsaturated group and at least one alcoholic hydroxyl group in each molecule may be a propylene glycol monoallyl ether having a number average molecular weight between about 600 and about 100, and an OH number of between about 50 and about 90.

The polymer having at least one unsaturated group and at least one alcoholic hydroxyl group in each molecule may be hydrosilylated by reacting the polymer with a compound having a hydrogen-silicon bond and a crosslinkable silyl group in the presence of a hydrosilylation catalyst.

The compound having a hydrogen-silicon bond and a crosslinkable silyl group in each molecule, may be represented by the general formula (III) shown below:

H-(Si(R¹_{2-b})(X_{b})OₘSi(R²₃₋ₐ)Xₐ (III)

where R¹ and R² are the same or different and each represents an alkyl group containing 1 to 20 carbon atoms, an aryl group containing 6 to 20 carbon atoms or an aralkyl group containing 7 to 20 carbon atoms or a triorganosiloxy group represented by R³₃SiO- and, when there are a plurality of R¹ or R² groups, they may be the same or different; R³ is a univalent hydrocarbon group containing 1 to 20 carbon atoms and the three R³ groups may be the same or different with one another; X represents a hydroxyl group or a hydrolyzable group and, when there are two or more X groups, they may be the same or different with each other or one another; a represents 0, 1, 2 or 3 and b represents 0, 1 or 2; b's in the m of-SiR¹_{2-b})(X_{b})O-groups may be the same or different with each other or one another; and m represents an integer from 0 to 19 provided that the relation a+∑b≥1 should be satisfied.

The hydrolysable group represented by X may be any of those hydrolysable groups known in the art, for example halogen atoms and alkoxy, acyloxy, ketoximato, amino, amido, acid amide, aminoxy, mercapto and alkenyloxy groups. Among them, alkoxy groups such as methoxy, ethoxy, propoxy and isopropoxy are preferred in view of their mild hydrolysability and the ease of handling. One to three such hydrolysable groups may be bonded to one silicon atom and the sum (a+∑b) is preferably 1 to 5. When there are two or more hydrolysable groups, they may be the same or different with each other or one another. The number of silicon atoms in the crosslinkable silyl group may be about 1 to 30.

In some embodiments the compound having a hydrogen-silicon bond and a crosslinkable silyl group in each molecule represented by the above general formula (I) may include the compounds represented by the general formula (IV):

H-Si(R⁴_{3-c})(X_{c}) (IV)

wherein R⁴represents an alkyl containing 1 to 20 carbon atoms, an aryl group containing 6 to 20 carbon atoms or an aralkyl group containing 7 to 20 carbon atoms or a triorganosiloxy group represented by R³₃SiO- and, when there are a plurality of R⁴ groups, they may be the same or different; R³ is a univalent hydrocarbon group containing 1 to 20 carbon atoms and the three R³ groups may be the same or different with one another; X represents a hydroxyl group or a hydrolyzable group and, when there are two or more X groups, they may be the same or different with each other or one another; and c represents 1, 2 or 3.

As specific examples of the compound having a hydrogen-silicon bond and a crosslinkable silyl group in each molecule, there may be mentioned halosilanes such as trichlorosilane, methyldichlorosilane, dimethylchlorosilane, phenyldichlorosilane, trimethylsiloxymethylchlorosilane and 1,1,3,3-tetramethyl-1-bromodisiloxane; alkoxysilanes such as trimethoxysilane, triethoxysilane, methyldiethoxysilane, methyldimethoxysilane, phenyldimethoxysilane, trimethylsiloxymethylmethoxysilane and trimethylsiloxydiethoxysilane; acyloxysilanes such as methyldiacetoxysilane, phenyldiacetoxysilane, triacetoxysilane, trimethylsiloxymethylacetoxysilane and trimethylsiloxydiacetoxysilane; ketoximatosilanes such as bis(dimethyl ketoximato)methylsilane, bis(cyclohexyl ketoximato)methylsilane, bis(diethyl ketoximato)trimethylsiloxysilane, bis(methyl ethyl ketoximato)methylsilane and tris(acetoximato)silane; alkenyloxysilanes such as methylisopropenyloxysilane; and the like. Preferred among them from the mild reactivity and ease of handling viewpoint are alkoxysilanes such as methyldimethoxysilane, trimethoxysilane, methyldiethoxysilane and triethoxysilane; and halosilanes such as trichlorosilane and methyldichlorosilane.

After the reaction with an unsaturated group in the manner of hydrosilylation, the halogen atom(s) in the halosilanes may be converted to some other hydrolyzable group(s) by reacting with an active hydrogen-containing compound such as a carboxylic acid, oxime, amide or hydroxylamine or a ketone-derived alkali metal enolate by an appropriate method known in the art.

### Epoxy Resin

The epoxy resin of Composition 1 can be any monomeric and/or polymeric material containing epoxy functionality. The compound containing reactive epoxy functionality can vary widely, and it includes monomers containing epoxy functionality and/or polymers containing epoxy functionality, e.g., epoxy terminated prepolymers. These epoxy resin components may include a blend of two or more epoxy resins. Epoxy resins are those compounds containing at least one vicinal epoxy group. The epoxy resin can be saturated or unsaturated, aliphatic, cycloaliphatic, aromatic or heterocyclic and can be substituted. The epoxy resin can be monomeric or polymeric.

In some embodiments, the epoxy resin component can include a polyepoxide. Polyepoxide refers to a compound or mixture of compounds containing more than one epoxy moiety. Polyepoxides include partially advanced epoxy resins that is, the reaction product of a polyepoxide and a chain extender, wherein the reaction product has, on average, more than one unreacted epoxide unit per molecule. Aliphatic polyepoxides may be prepared from the reaction of epihalohydrins and polyglycols. Other specific examples of aliphatic epoxides include trimethylpropane epoxide, and diglycidyl-1,2-cyclohexane dicarboxylate. Other compounds include, epoxy resins such as, for example, the glycidyl ethers of polyhydric phenols (that is, compounds having an average of more than one aromatic hydroxyl group per molecule).

In some embodiments, the epoxy resins used in the epoxy resin component of the present compositions includes at least one halogenated or halogen-containing epoxy resin compound. The solvent blends in the present compositions are well-suited for use with highly halogenated (e.g., highly brominated) epoxy resins because they are able to solubilize these difficult-to-solubilize resins and provide and maintain them in solution for long periods. Thus, in some embodiments halogenated epoxy resins of the present compositions can have a halogen content of at least 35 weight percent, at least 45 weight percent, or even at least 55 weight percent.

Halogen-containing epoxy resins are compounds containing at least one vicinal epoxy group and at least one halogen. The halogen can be, for example, chlorine or bromine, and is preferably bromine. Examples of halogen-containing epoxy resins useful in the present invention include diglycidyl ether of tetrabromobisphenol A and derivatives thereof. Examples of brominated epoxy resins useful in the present invention include commercially available resins such as the D.E.R.™ 500 series (e.g., D.E.R. 560 and D.E.R. 542), commercially available from The Dow Chemical Company.

In one embodiment, the epoxy resins utilized in the compositions of the present invention include those resins produced from an epihalohydrin and a phenol or a phenol type compound. The phenol type compound includes compounds having an average of more than one aromatic hydroxyl group per molecule. Examples of phenol type compounds include dihydroxy phenols, biphenols, bisphenols, halogenated biphenols, halogenated bisphenols, hydrogenated bisphenols, alkylated biphenols, alkylated bisphenols, trisphenols, phenol-aldehyde resins, novolac resins (that is the reaction product of phenols and simple aldehydes, such as formaldehyde), halogenated phenol-aldehyde novolac resins, substituted phenol-aldehyde novolac resins, phenol-hydrocarbon resins, substituted phenol-hydrocarbon resins, phenol-hydroxybenzaldehyde resins, alkylated phenol-hydroxybenzaldehyde resins, hydrocarbon-phenol resins, hydrocarbon-halogenated phenol resins, hydrocarbon-alkylated phenol resins, or combinations thereof. Specifically, phenol type compounds include resorcinol, catechol, hydroquinone, bisphenol A, bisphenol AP (1,1-bis(4-hydroxyphenyl)-1-phenyl ethane), bisphenol F, bisphenol K, tetrabromobisphenol A, phenol-formaldehyde novolac resins, alkyl substituted phenol-formaldehyde resins, cresol-hydroxybenzaldehyde resins, dicyclopentadiene-phenol resins, dicyclopentadiene-substituted phenol resins, tetramethylbiphenol, tetramethyl-tetrabromobiphenol, tetramethyltribromobiphenol, and tetrachlorobisphenol A.

Examples of bisphenol A based epoxy resins useful in the epoxy resin component include commercially available resins such as the D.E.R.™ 300 series and D.E.R.™ 600 series, commercially available from The Dow Chemical Company. Examples of epoxy novolac resins useful in the compositions include commercially available resins such as the D.E.N.™ 400 series (e.g., D.E.N. 438 and D.E.N. 439), commercially available from The Dow Chemical Company. The solvent blends in the present compositions are well-suited for use with higher functionalized epoxy resins because they are able to solubilize these difficult-to-solubilize resins and provide and maintain them in solution for long periods. Thus, in some embodiments the functionalized epoxy resins of the present compositions can have a functionality of at least 1.5, at least 3, or even at least 6.

In some embodiments, the epoxy resins utilized in the epoxy component include those resins produced from an epihalohydrin and an amine. Suitable amines include diaminodiphenylmethane, aminophenol, xylene diamine, anilines, or combinations thereof.

In some embodiments, the epoxy resins utilized in the epoxy component include those resins produced from an epihalohydrin and a carboxylic acid. Suitable carboxylic acids include phthalic acid, isophthalic acid, terephthalic acid, tetrahydro- and/or hexahydrophthalic acid, endomethylenetetrahydrophthalic acid, isophthalic acid, methylhexahydrophthalic acid, or combinations thereof.

In some embodiments the epoxy resin is an advanced epoxy resin which is the reaction product of one or more epoxy resins, as described above, with one or more phenol type compounds and/or one or more compounds having an average of more than one aliphatic hydroxyl group per molecule. Alternatively, the epoxy resin may be reacted with a carboxyl substituted hydrocarbon, which is a compound having a hydrocarbon backbone, preferably a C₁-C₄₀ hydrocarbon backbone, and one or more carboxyl moieties, preferably more than one, and most preferably two. The C₁-C₄₀ hydrocarbon backbone can be a straight- or branched-chain alkane or alkene, optionally containing oxygen. Fatty acids and fatty acid dimers are among the useful carboxylic acid substituted hydrocarbons. Included in the fatty acids are caproic acid, caprylic acid, capric acid, octanoic acid, decanoic acid, lauric acid, myristic acid, palmitic acid, stearic acid, palmitoleic acid, oleic acid, linoleic acid, linolenic acid, erucic acid, pentadecanoic acid, margaric acid, arachidic acid, and dimers thereof.

In some embodiments, the epoxy resin is the reaction product of a polyepoxide and a compound containing more than one isocyanate moiety or a polyisocyanate. For example, the epoxy resin produced in such a reaction can be an epoxy-terminated polyoxazolidone.

In one specific embodiment, the epoxy resin component is a blend of a brominated epoxy resin and a phenolic novolac epoxy resin.

The present epoxy compositions are desirably high-solids compositions. Therefore, in some embodiments the compositions have an epoxy resin solids content of at least 70 weight percent, based on total weight of the composition. This includes compositions having an epoxy resin solids content of at least 75 weight percent, at least 80 weight percent and at least 85 weight percent, based on the total weight of the composition. For example, some of the present compositions have an epoxy resin content of 70 to 100 weight percent. This includes compositions having an epoxy resin content of 75 to 100 weight percent and further includes compositions having an epoxy resin content of 80 to 100 weight percent.

### Cure Catalyst

The cure catalysts that can be used in the practice of this invention for both Compositions 1 and 2 include aliphatic amines, alicyclic amines, aromatic amines, polyaminoamides, imidazoles, dicyandiamides, epoxy-modified amines, Mannich-modified amines, Michael addition-modified amines, ketimines, acid anhydrides, alcohols and phenols, among others. These cure catalysts, also known as curing agents, can be used each independently or in a combination of two or more species. The catalysts can be used either alone or in combination with one or more other catalysts. Representative catalysts include dibutyltin dilaurate, dibutyltin acetoacetate, titanium acetoacetate, titanium ethyl acetoacetate complex and tetraisopropyl titanate, bismuth carboxylate, zinc octoate, blocked tertiary amines, zirconium complexes, and combinations of amine and Lewis acid catalysts adducts of tin compositions and silicic acid. In one embodiment of this invention, the molecular weight of the epoxy resin is built through the use of a curing agent, e.g., an amine. In this embodiment the typical molar ratio of epoxy to amine is 1:1 to 1.4:1. In one embodiment of this invention, the molecular weight of the epoxy resin is built through opening of the epoxy ring.

### Silylated Polymer Composition

The SMP compositions of this invention are liquid, and they comprise (A) a silylated polymer, (B) an epoxy resin, and, optionally (C) a cure agent, all as described above. These compositions, both Compositions 1 and 2, typically contain from 35 to 99 wt%, more typically from 35 to 95 wt% and even more typically from 35 to 90 wt% SMP; from 1 to 65 wt%, more typically from 5 to 65 wt% and even more typically from 10 to 65 wt% epoxy resin; and from 0 to 5 wt%, more typically from 0.05 to 10 wt% and even more typically from 0.1 or 0.5 to 5 wt% cure agent.

The SMP compositions of this invention may also include various additives and fillers such as, but not limited to, plasticizers such as phthalic acid esters, non-aromatic dibasic acid esters and phosphoric esters, polyesters of dibasic acids with a dihydric alcohol, polypropylene glycol and its derivatives, polystyrene; non-reactive solvents such as hydrocarbons, acetic acid esters, alcohols, ethers and ketones; anti-sagging agents, such as hydrogenated castor oil, organic bentonite, calcium stearate, etc.; coloring agents; antioxidants; ultraviolet absorbers; light stabilizers; tackifying agents; and fillers such as calcium carbonate, kaolin, talc, silica, titanium dioxide, aluminum silicate, magnesium oxide, zinc oxide and carbon black, among others. These additives and fillers may be used each independently or in a combination of two or more species. These additives and fillers are used in known ways and amounts.

### Polymer Concrete

Polymer concretes are typically made from a mixture of sand or other aggregate, a polymeric binder, and water. Polymer concretes are well known to those of skill in the art of masonry and their composition can vary widely in terms of the nature and amount of sand/aggregate (e.g., silicon dioxide, calcium carbonate, crystobalite, pyrogenic silicas, precipitated silicas, wollastonite, chalk, kaolin, mica, borosilicates, barium aluminosilicates, glass powders, titanium silicates, zirconium silicates, montmorillonite, talc, marble particles, gypsum, corundum, ceramic fillers volcanic ash, diatomaceous earth and the like), the nature and amount of polymeric binder, and the amount of water in the composition that constitutes the concrete.

The polymer concretes of this invention are prepared and employed using known procedures and known equipment. The silylated polymer compositions of this invention are typically substituted for all or some of the polymeric binder component of the concrete. Typically, a polymer concrete will comprise from 20to 95 wt%, more typically from 50 to 90wt% and even more typically from 65 to 85wt% of the silylated polymer composition on a weight basis.

The polymer concretes of this invention are useful in the repair of masonry, stone and conventional concrete, and it is used in the same manner as mortar. The silylated polymer compositions of this invention are liquid and they are mixed with the solid aggregates, e.g., sand to the desired consistency, and then applied to the surface in need of repair, e.g., a crack, hole or other opening in the masonry, stone or conventional concrete. The surface to which the polymer concrete is applied is prepared in a manner similar to that for repairing the surface with traditional mortar. The polymer concrete is allowed to cure under ambient conditions, again in a manner similar to that for the cure of traditional mortar. The polymer concretes of this invention are particularly well suited for repairing wet masonry, stone or conventional concrete surfaces under winter conditions, e.g., below freezing (<0°C) and wet weather.

The following examples are illustrative of certain embodiments of the invention.

### EXAMPLES

### Materials

Prepolymer 1 is an epoxy terminated prepolymer, a reaction product of D.E.R. 383 and JEFFAMINE® T-5000 at a 5:1 molar ratio with an epoxy equivalent molecular weight (EEW) of 460 g/mol available from The Dow Chemical Company.

JEFFAMINE® T-5000 is branched polyoxypropyleneamine with amine equivalent molecular weight (AEW) of 952 g/mol available from Huntsman Performance Products.

SMP-1 is linear polyether-based silylated polymer with molecular weight greater than 8,000 g/mol available from The Dow Chemical Company. This is a reaction product of silylated prepolymer and diol which is a propylene oxide based diol of 8000 molecular weight made by DMC process.

SMP-2 is branched polyether-based silylated polymer with molecular weight greater than 8,000 g/mol available from The Dow Chemical Company This is a reaction product of silylated prepolymer and triol which is a propylene oxide and ethylene oxide based 6000 molecular KOH catalyzed triol.

TETA is triethylenetetramine (D.E.H.™24) available from The Dow Chemical Company.

D.E.R.™383 liquid epoxy resin is a reaction product of epichlorohydrin and bisphenol A with an EEW of 180 grams per mole (g/mol)available from The Dow Chemical Company.

AIRSTONE™780E liquid epoxy resin is a blend of D.E.R.™383 and butanediol diglycidyl ether.

Water is deionized water.

DBTAA is dibutyltin bis(acetylacetonate available from Aldrich Chemical.

A1110 is an amino silane available from Momentive Specialty Chemicals.

Calcium carbonate is IMERSEAL™75 obtained from Imerys.

Talc is obtained from Johnson & Johnson.

### Composition 1

Typical formulations of Composition 1 are reported in Table 1 with tensile properties.

**Table 1**

| Two-Component (2K) of SMP-2/ Epoxy NT515 Prepolymer | | | | | | | | | | | |
|---|---|---|---|---|---|---|---|---|---|---|---|
| | Comp. Ex. A | Comp. Ex. B | Comp. Ex. C | Ex. 1 | Ex. 2 | Ex. 3 | Ex. 4 | Ex. 5 | Ex. 6 | Ex. 7 | Ex. 8 |
| **Side A** | | | | | | | | | | | |
| SMP-2 (gm) | 99.1 | 21.6 | - | 60 | 53.3 | 46.5 | 30.3 | 30 | 15 | 10 | 5 |
| TETA (gm) | - | 6.9 | - | 3 | 4 | 4.7 | 6.1 | 1.5 | 1.5 | 1.5 | 1.5 |
| A1110 (gm) | - | 1.1 | 9.2 | 1.2 | 1.2 | 0.9 | 1.2 | 0.6 | 0.6 | 0.6 | 0.6 |
| | | | | | | | | | | | |
| **Side B** | | | | | | | | | | | |
| D.E.R. 383 (gm) | - | 68.5 | 91.8 | 30 | 40 | 46.5 | 60.6 | - | - | - | - |
| Prepolymer 1 (gm) | - | - | - | - | - | - | - | 30.4 | 30.4 | 30.4 | 30.4 |
| Water (gm) | - | 0.3 | - | 0.3 | 0.3 | 0.3 | 0.3 | 0.15 | 0.15 | 0.15 | 0.15 |
| DBTAA (gm) | 0.9 | 0.9 | - | 0.9 | 0.9 | 0.9 | 0.9 | 0.9 | 0.9 | 0.9 | 0.9 |
| | | | | | | | | | | | |
| **Properties** | | | | | | | | | | | |
| % Epoxy in the formulation | 0% | 70% | 100% | 30% | 40% | 50% | 60% | 23% | 30% | 34% | 38% |
| Tensile Strength (psi) | 70 | 2447 | | 255 | 351 | 490 | 638 | 249 | 629 | 705 | 558 |
| Elongation (%) | 150 | 5 | | 264 | 196 | 175 | 79 | 109 | 147 | 119 | 107 |

### Epoxy-Terminated Prepolymer Synthesis

Prepolymer 1 is made by the following process: 180.0 g of D.E.R. 383 is charged into a 500 ml four-neck round bottom flask having a dripping funnel, a mechanical stirrer, a heater and a wire thermocouple. 190.4 g of JEFFAMINE® T-5000 is charged into the dripping funnel. The contents of the flask are heated to 115 °C under nitrogen atmosphere. JEFFAMINE® T-5000 is added drop wise over 1 hour to the contents of the flask with stirring. After the addition of the JEFFAMINE® T-5000, the contents of the flask are held at 115 °C under nitrogen atmosphere for 4 hours.

### Sample Preparation

Each A and B side components are separately mixed in a plastic cup using a FLACKTEK SPEEDMIXER at 800 rpm for 30 seconds, followed by 2350 rpm for 1 minute. The A side mixture is then transferred to the other container charged with the B side mixture, and speed-mixed again at the same conditions. The homogeneous mixture is poured on a polypropylene film and coated using a doctor blade. The polymer films are cured at ambient temperature (about 23C) for 3 days. The cured films were punched out into dog bones and used to measure tensile properties using a microtensile instrument in accordance with ASTM D-1708. The results are summarized in Table 1 in comparison to the control system (SMP-2).

**Table 2**

| Tensile Properties of SMP/D.E.R.383 and SMP/NT515 Formulations | | | |
|---|---|---|---|
| | **Ex.9** | **Ex.10** | **Ex. 11** |
| **Side A** | | | |
| SMP-1 | 32.6 | - | - |
| SMP-2 | - | 32.6 | 32.6 |
| TETA | 3.3 | 3.3 | 3.3 |
| Aminosilane (A1110) | 0.9 | 0.9 | 0.9 |
| Talc | 11 | - | 10 |
| | | | |
| **Side B** | | | |
| Part B | | | |
| Epoxy 780E | 32.6 | 32.6 | 32.6 |
| DBTAA (cat.) | 0.5 | 0.5 | 0.5 |
| Water | 0.2 | 0.2 | 0.2 |
| Calcium carbonate | 20 | 30 | 20 |
| | | | |
| **Properties** | | | |
| Shore A (ASTM D2240) | 68 | 75 | 76 |
| Mechanical Properties (ASTM D-1708) | | | |
| Modulus (MPa) | 17.4 | 15.6 | 20 |
| Elongation at break (%) | 80 | 70 | 40 |
| Tensile strength (MPa) | 1.5 | 2.4 | 2.1 |
| Adhesion (lap shear ASTM 1002-01) | | | |
| Glass (MPa) | 0.66 (SF) | - | 1.28 (SF) |
| Wood (MPa) | 0.99 (CF) | - | 1.5 (CF) |
| Polypropylene (MPa) | 0.29 (AF/CF) | - | 0.2 (CF/AF) |
| Polycarbonate (MPa) | 1.13 (CF) | - | 1.44 (CF) |
| Steel (MPa) | 1.51 (CF) | - | 1.67 (CF) |

| | | | |
|---|---|---|---|
| SF=Substrate failure, CF=Cohesive failure, AF=Adhesive failure | | | |

### Composition 2

Typical formulations of Composition 1 with fillers are illustrated in Table 2.

**Table 3**

| System | Peak exotherm (°C) | Gel time (min, time to reach max exotherm) |
|---|---|---|
| Comp. Ex. C | 180 | 60 |
| Ex.1 | 37 | 25 |
| Ex.3 | 70 | 50 |

**Table 4**

| Mechanical Properties of Silylated Polymers and Epoxy Silylated Polymers Containing 30 wt% Epoxy | | | | | | | | |
|---|---|---|---|---|---|---|---|---|
| | Comp. Ex .A | Comp . Ex.D | Ex.2 | Ex.3 | Ex.4 | Ex.12 | Ex.13 | Ex.14 |
| **Side A** | | | | | | | | |
| SMP-1 (gm) | - | 99.1 | - | - | - | 60 | 46.5 | 30.3 |
| SMP-2 (gm) | 99.1 | - | 53.3 | 46.5 | 30.3 | - | - | - |
| TETA (gm) | - | - | 4 | 4.7 | 6.1 | 3 | 4.7 | 6.1 |
| A1110 (gm) | - | - | 1.2 | 0.9 | 1.2 | 1.2 | 0.9 | 1.2 |
| | | | | | | | | |
| **Side B** | | | | | | | | |
| D.E.R. 383 (gm) | - | - | 40 | 46.5 | 60.6 | 30 | 46.5 | 60.6 |
| Water (gm) | - | - | 0.3 | 0.3 | 0.3 | 0.3 | 0.3 | 0.3 |
| Dibutyltin Bis(Acetylacetonate) (gm) | 0.9 | 0.9 | 0.9 | 0.9 | 0.9 | 0.9 | 0.9 | 0.9 |
| | | | | | | | | |
| **Properties** | | | | | | | | |
| % Epoxy in the formulation | 0% | 0% | 40% | 50% | 60% | 30% | 50% | 60% |
| Thermal Decomposition Temperature (5% weight loss) (°C) | 221 | 207 | 258 | 263 | 257 | - | 256 | 255 |

Lap shear data is given in Table 5.

**Table 5**

| | Lap Shear Adhesion to Glass (psi) | Lap Shear Adhesion to Wood (psi) | Lap Shear Adhesion to Steel (psi) |
|---|---|---|---|
| Comp. Ex .A | 45 | 43 | 32 |
| Comp. Ex. D | 85 | 36 | 22 |
| Ex.1 | 53 | 68 | 111 |
| Ex.2 | 154 | 92 | - |
| Ex.3 | 79 | 166 | 473 |
| Ex.12 | 110 | 91 | 186 |
| Ex.13 | 143 | 184 | 240 |
| Ex.14 | 62 | 198 | 195 |

Data from the thermogravimetric analysis TGA plots showing the improvement in thermal decomposition temperatures (Td) versus the neat SMP systems is reported in Table 4.

Unique phase separated morphology was observed for Epoxy/SMP hybrids by atomic force microscopy (AFM) as seen in Figures 1A and 1B. The soft phase (SMP) appears dark and the hard phase (Epoxy) appears bright.

### Polymer Concrete

### Preparation of Concrete Substrates

Six inch by 12" concrete slabs are used for the adhesion testing. For wet condition, the concrete slabs are submerged into water for 3 hours. After the slabs are retrieved from the water, the surface is wiped dry with towel paper and the polymer concrete is immediately applied.

### Preparation of Polymer Concrete

Side A and Side B are prepared using the formulations reported in Table 5. For each formulation the Side A and Side B is mixed together first until homogeneous. This blend is then mixed with silica sand (16-35 mesh) at a 3:1 sand:resin ratio.

**Table 6**

| Side A and Side B Formulations of Composition 2 | | | | |
|---|---|---|---|---|
| | Ex. 15 | Ex. 16 | Ex. 17 | Ex. 18 |
| **Side A** | | | | |
| SMP-1 | 48.8 | 39.0 | - | - |
| SMP-2 | - | - | 48.8 | 39.0 |
| | | | | |
| TETA | 4.48 | 5.38 | 4.48 | 5.38 |
| Aminosilane (A 1110) | 1.25 | 1.25 | 1.25 | 1.25 |
| A171 silane | 0.15 | 0.15 | 0.15 | 0.15 |
| | | | | |
| **SideB** | | | | |
| Epoxy 780E | 44.3 | 53.2 | 44.3 | 53.2 |
| DBTAA (cat.) | 0.70 | 0.70 | 0.70 | 0.70 |
| Water | 0.30 | 0.32 | 0.30 | 0.32 |
| | | | | |
| **Post addition** | | | | |
| Sand | 300 | 300 | 300 | 300 |

### Preparation of Test Specimen and Adhesion Testing

A 1/8 to 1/4 inch layer of the polymeric concrete is put onto the surface of the concrete substrate and allowed to cure for 1 week. After the polymeric concrete has cured, a 1" circle of the polymeric concrete is drilled out and the excess material around the 1 inch disk is removed. An epoxy adhesive is used to attach the surface of the epoxy silylated-modified polymer (ESMP) polymer concrete to attach a F-20 piston and the adhesive strength is measured by in accordance to ASTM 4541, test method F.

Some samples are also subjected to 16 thermal cycles from room temperature to -10°F and them back to room temperature. After this thermal cycling, the samples are tested as described above.

The type of failure during the adhesive testing is noted. A failure type designated as "adhesive failure" or "coating failed while drilling" denotes that this epoxy adhesive debonded from the ESMP and it is not a failure at the concrete-ESMP interface. For the "adhesive failure" modes, the strength of the concrete-ESMP interface is at least as high as the measured value in this case.

**Table 7**

| Adhesive Testing Results | | | | |
|---|---|---|---|---|
| | Ex. 15 | Ex. 16 | Ex. 17 | Ex. 18 |
| Adhesion Strength (psi) | N/A | 154 | 180 | 55 |
| Failure type | Coating failed while drilling | Adhesive failure | failure at mortar/substrate | failure at mortar/substrate |
| Adhesion Strength (psi) | 95 | 177 | 205 | 62 |
| Failure type | failure at mortar/substrate | failure at mortar/substrate | failure at mortar/substrate | failure at mortar/substrate |

It is specifically intended that the present invention not be limited to the embodiments and illustrations contained herein, but include modified forms of those embodiments including portions of the embodiments and combinations of elements of different embodiments as come within the scope of the following claims.

## Claims

1. A polymer concrete comprising a SMP composition comprising (A) a SMP, (B) an epoxy-terminated prepolymer, and (C) a cure catalyst.

2. The polymer concrete of Claim 1 wherein the SMP composition further comprises a monomer containing epoxy functionality.

3. The polymer concrete of Claim 1 or 2 in which the prepolymer is an epoxy end-capped polyetheramine.

4. The polymer concrete of any of the previous claims, wherein the SMP comprises at least one molecule of Structure I: 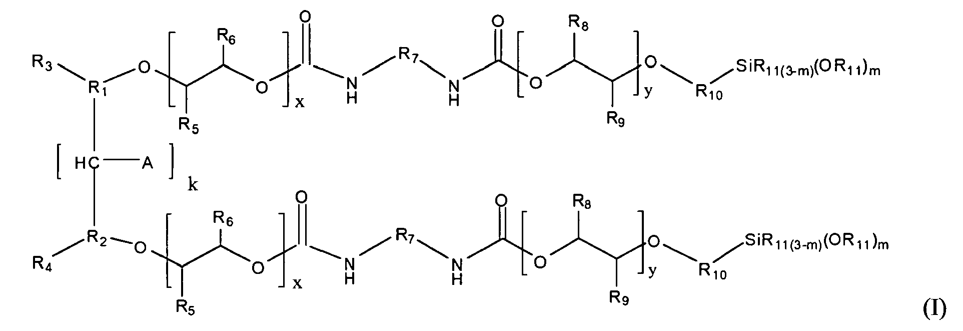 where A is either H or has the Structure (II): 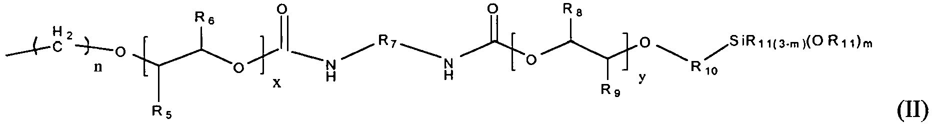 k is a number from 0 to 4; m and n are independently numbers from 0 to 3; x is a number from 5 to 150; y is a number from 4 to 20; R₁, R₂, R₁₀, and R₁₁ are independently straight chain or branched chain alkyl groups having from 1 to about 4 carbon atoms; each individual R₁₀ are the same or different and each individual R₁₁ are the same or different; R₃, R₄, R₅, R₆, R₈, and R₉ are independently selected from H and straight chain or branched chain alkyl groups having from 1 to about 4 carbon atoms; R₇ has from 2 to about 20 carbon atoms and is aliphatic, cycloaliphatic, bis-benzylic, or aromatic; and if k is 0, then n is 0 and R₁ and R₂ are coupled through a carbon-carbon bond.

5. A polymer concrete comprising a silylated polymer composition comprising:
A) A silylated polymer comprising at least one molecule of Structure I: 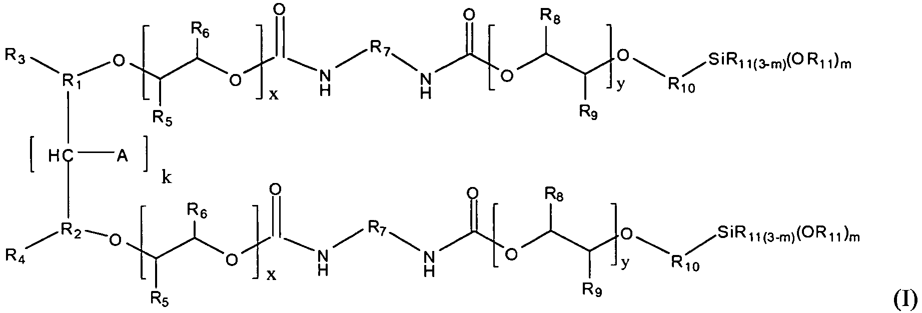 where A is either H or has the Structure (II): 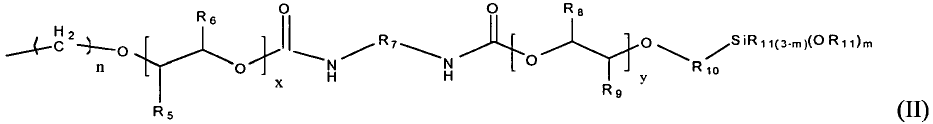 k is a number from 0 to 4; m and n are independently numbers from 0 to 3; x is a number from 5 to 150; y is a number from 4 to 20; R₁, R₂, R₁₀, and R₁₁ are independently straight chain or branched chain alkyl groups having from 1 to about 4 carbon atoms; each individual R₁₀ are the same or different and each individual R₁₁ are the same or different; R₃, R₄, R₅, R₆, R₈, and R₉ are independently selected from H and straight chain or branched chain alkyl groups having from 1 to about 4 carbon atoms; R₇ has from 2 to about 20 carbon atoms and is aliphatic, cycloaliphatic, bis-benzylic, or aromatic; and if k is 0, then n is 0 and R₁ and R₂ are coupled through a carbon-carbon bond;
B) A polymer containing reactive epoxy functionality, and
C) A cure catalyst.

6. The polymer concrete of Claim 5 in which the polymer containing reactive epoxy functionality is an epoxy-terminated prepolymer.

7. The polymer concrete of Claim 6 in which the prepolymer is an epoxy end-capped polyetheramine.

8. A method for repairing concrete, the method comprising the step of applying to the wet concrete a patch of polymer concrete comprising an SMP composition of any of Claims 1-7.

## Patentansprüche

1. Ein Polymerbeton, der eine SMP-Zusammensetzung beinhaltet, die (A) ein SMP, (B) ein epoxyterminiertes Prepolymer und (C) einen Aushärtungskatalysator beinhaltet.

2. Polymerbeton gemäß Anspruch 1, wobei die SMP-Zusammensetzung ferner ein Monomer beinhaltet, das Epoxyfunktionalität enthält.

3. Polymerbeton gemäß Anspruch 1 oder 2, wobei das Prepolymer ein epoxy-endverkapptes Polyetheramin ist.

4. Polymerbeton gemäß einem der vorhergehenden Ansprüche, wobei das SMP mindestens ein Molekül der Struktur I beinhaltet: 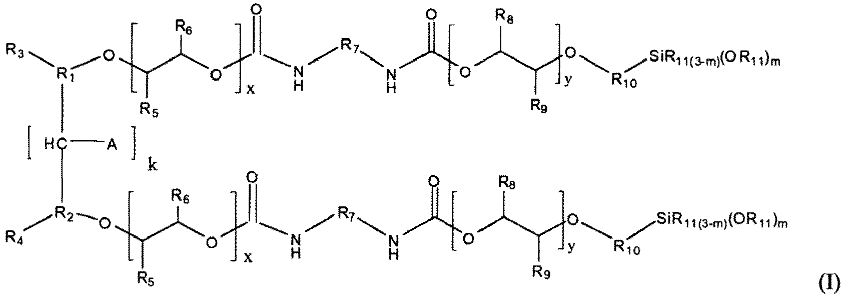 wobei A entweder H ist oder die Struktur (II) aufweist: 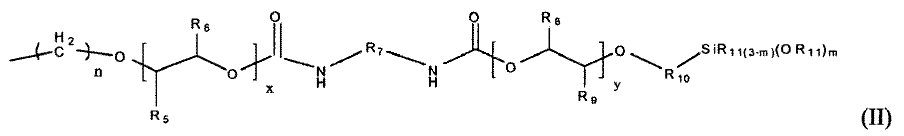 k eine Zahl von 0 bis 4 ist; m und n unabhängig Zahlen von 0 bis 3 sind; x eine Zahl von 5 bis 150 ist; y eine Zahl von 4 bis 20 ist; R₁, R₂, R₁₀ und R₁₁ unabhängig geradkettige oder verzweigtkettige Alkylgruppen mit von 1 bis etwa 4 Kohlenstoffatomen sind; jedes einzelne R₁₀ gleich oder verschieden ist und jedes einzelne R₁₁ gleich oder verschieden ist; R₃, R₄, R₅, R₆, R₈ und R₉ unabhängig aus H und geradkettigen oder verzweigtkettigen Alkylgruppen mit von 1 bis etwa 4 Kohlenstoffatomen ausgewählt sind; R₇ von 2 bis etwa 20 Kohlenstoffatome aufweist und aliphatisch, cycloaliphatisch, bis-benzylisch oder aromatisch ist; und wenn k 0 ist, n dann 0 ist und R₁ und R₂ durch eine Kohlenstoff-Kohlenstoff-Bindung miteinander verbunden sind.

5. Ein Polymerbeton, der eine silylierte Polymerzusammensetzung beinhaltet, die Folgendes beinhaltet:
A) ein silyliertes Polymer, das mindestens ein Molekül der Struktur I beinhaltet: 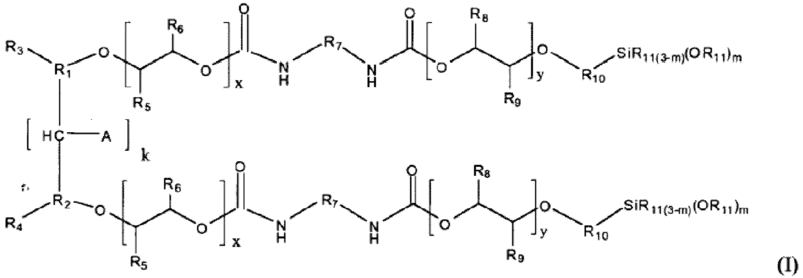 wobei A entweder H ist oder die Struktur (II) aufweist: 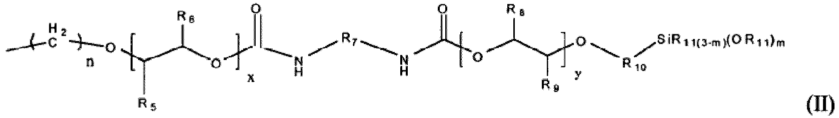 k eine Zahl von 0 bis 4 ist; m und n unabhängig Zahlen von 0 bis 3 sind; x eine Zahl von 5 bis 150 ist; y eine Zahl von 4 bis 20 ist; R₁, R₂, R₁₀ und R₁₁ unabhängig geradkettige oder verzweigtkettige Alkylgruppen mit von 1 bis etwa 4 Kohlenstoffatomen sind; jedes einzelne R₁₀ gleich oder verschieden ist und jedes einzelne R₁₁ gleich oder verschieden ist; R₃, R₄, R₅, R₆, R₈ und R₉ unabhängig aus H und geradkettigen oder verzweigtkettigen Alkylgruppen mit von 1 bis etwa 4 Kohlenstoffatomen ausgewählt sind; R₇ von 2 bis etwa 20 Kohlenstoffatome aufweist und aliphatisch, cycloaliphatisch, bis-benzylisch oder aromatisch ist; und wenn k 0 ist, n dann 0 ist und R₁ und R₂ durch eine Kohlenstoff-Kohlenstoff-Bindung miteinander verbunden sind;
B) ein Polymer, das reaktive Epoxyfunktionalität enthält, und
C) einen Aushärtungskatalysator.

6. Polymerbeton gemäß Anspruch 5, wobei das Polymer, das reaktive Epoxyfunktionalität enthält, ein epoxyterminiertes Prepolymer ist.

7. Polymerbeton gemäß Anspruch 6, wobei das Prepolymer ein epoxy-endverkapptes Polyetheramin ist.

8. Ein Verfahren zum Reparieren von Beton, wobei das Verfahren den Schritt des Aufbringens eines Polymerbetonflecks, der eine SMP-Zusammensetzung gemäß einem der Ansprüche 1-7 beinhaltet, auf den nassen Beton beinhaltet.

## Revendications

1. Un béton de polymère comprenant une composition de SMP comprenant (A) un SMP, (B) un prépolymère à terminaison époxy, et (C) un catalyseur de durcissement.

2. Le béton de polymère de la revendication 1 dans lequel la composition de SMP comprend en outre un monomère contenant une fonctionnalité époxy.

3. Le béton de polymère de la revendication 1 ou de la revendication 2 dans lequel le prépolymère est une polyétheramine à coiffe terminale époxy.

4. Le béton de polymère de n'importe lesquelles des revendications précédentes, dans lequel le SMP comprend au moins une molécule de Structure I : 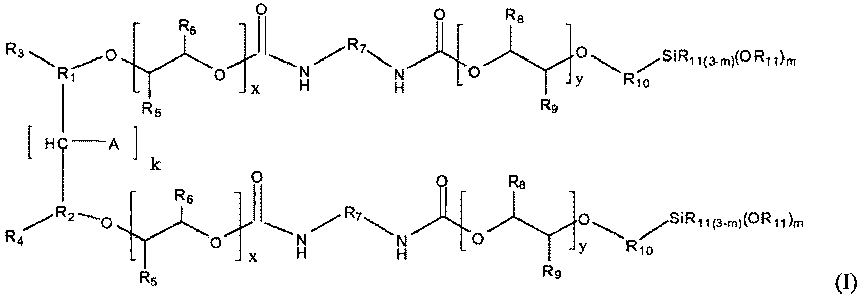 où A soit est H, soit a la Structure (II) : 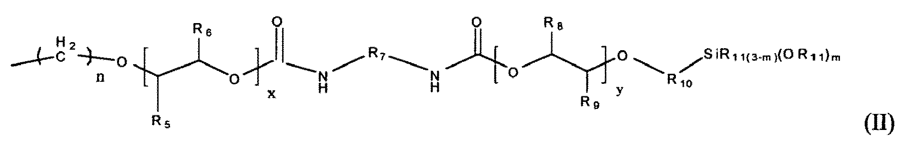 k est un nombre allant de 0 à 4 ; m et n sont indépendamment des nombres allant de 0 à 3 ; x est un nombre allant de 5 à 150 ; y est un nombre allant de 4 à 20 ; R₁, R₂, R₁₀, et R₁₁ sont indépendamment des groupes alkyle à chaîne droite ou à chaîne ramifiée ayant de 1 à environ 4 atomes de carbone ; tous les R₁₀ individuels sont identiques ou différents et tous les R₁₁ individuels sont identiques ou différents ; R₃, R₄, R₅, R₆, R₈, et R₉ sont indépendamment sélectionnés parmi H et des groupes alkyle à chaîne droite ou à chaîne ramifiée ayant de 1 à environ 4 atomes de carbone ; R₇ a de 2 à environ 20 atomes de carbone et est aliphatique, cycloaliphatique, bis-benzylique, ou aromatique ; et si k est 0, alors n est 0 et R₁ et R₂ sont couplés par l'intermédiaire d'une liaison carbone-carbone.

5. Un béton de polymère comprenant une composition de polymère silylé comprenant :
A) un polymère silylé comprenant au moins une molécule de Structure I : 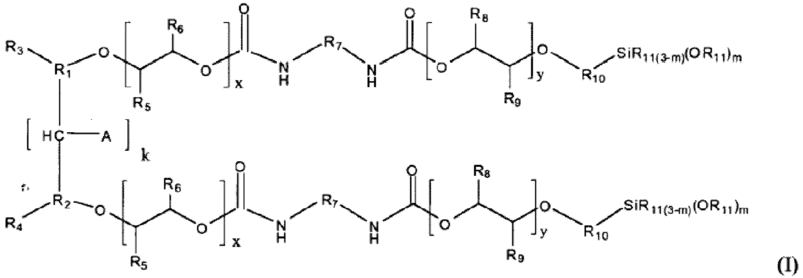 où A soit est H, soit a la Structure (II) : 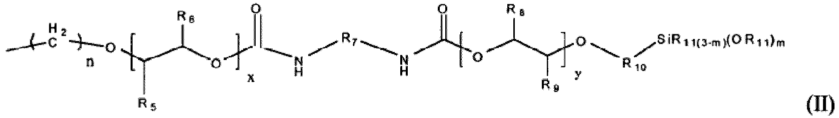 k est un nombre allant de 0 à 4 ; m et n sont indépendamment des nombres allant de 0 à 3 ; x est un nombre allant de 5 à 150 ; y est un nombre allant de 4 à 20 ; R₁, R₂, R₁₀, et R₁₁ sont indépendamment des groupes alkyle à chaîne droite ou à chaîne ramifiée ayant de 1 à environ 4 atomes de carbone ; tous les R₁₀ individuels sont identiques ou différents et tous les R₁₁ individuels sont identiques ou différents ; R₃, R₄, R₅, R₆, R₈, et R₉ sont indépendamment sélectionnés parmi H et des groupes alkyle à chaîne droite ou à chaîne ramifiée ayant de 1 à environ 4 atomes de carbone ; R₇ a de 2 à environ 20 atomes de carbone et est aliphatique, cycloaliphatique, bis-benzylique, ou aromatique ; et si k est 0, alors n est 0 et R₁ et R₂ sont couplés par l'intermédiaire d'une liaison carbone-carbone ;
B) un polymère contenant une fonctionnalité époxy réactive, et
C) un catalyseur de durcissement.

6. Le béton de polymère de la revendication 5 dans lequel le polymère contenant une fonctionnalité époxy réactive est un prépolymère à terminaison époxy.

7. Le béton de polymère de la revendication 6 dans lequel le prépolymère est une polyétheramine à coiffe terminale époxy.

8. Une méthode pour réparer du béton, la méthode comprenant l'étape consistant à appliquer sur le béton humide une pièce de béton de polymère comprenant une composition de SMP de n'importe lesquelles des revendications 1 à 7.
